# EUROPÄISCHE PATENTSCHRIFT

(11) **EP 2 808 716 B1**
(45) Veröffentlichungstag und Bekanntmachung des Hinweises auf die Patenterteilung: **06.07.2016**
(21) Anmeldenummer: 14168524.8
(22) Anmeldetag: 15.05.2014
(51) Int. Cl.: G02B 7/04

(54) **Fotografisches Weitwinkelobjektiv mit Innenfokussierung**
Photographic wide-angle lens with internal focusing
Objectif photographique grand angle à mise au point interne

(30) Priorität: 27.05.2013 DE 102013105425
(43) Veröffentlichungstag der Anmeldung: 03.12.2014
(73) Patentinhaber: Jos. Schneider Optische Werke GmbH, 55543 Bad Kreuznach (DE)
(72) Erfinder: Wang, Lingli, 55543 Bad Kreuznach (DE); Shyshkin, Ihar, 55543 Bad Kreuznach (DE)
(74) Vertreter: Schneider, Peter Christian

(56) Entgegenhaltungen:
- JP-A- 2008 170 720
- US-A1- 2004 066 562

## Beschreibung

### Gebiet der Erfindung

Die Erfindung bezieht sich auf ein fotografisches Weitwinkelobjektiv mit Innenfokussierung, umfassend drei Linsengruppen, nämlich
- eine in sich starre, objektseitig fest angeordnete Frontgruppe negativer Brechkraft mit drei einander unmittelbar benachbarten, negativen Meniskuslinsen mit objektseitig ausgerichteten Konvexflächen,
- eine in sich starre, rückwärtige Gruppe positiver Brechkraft, die bildseitig einer Aperturblende fest angeordnet ist und deren bildseitige Abschlusslinse als positive, asphärische Meniskuslinse ausgebildet ist, und
- eine axial bewegbare, zwischen der Frontgruppe und der Aperturblende angeordnete und aus einem optischen Einzelelement bestehende Fokussiergruppe positiver Brechkraft, durch deren Linearverschiebung von einer maximal objektseitigen zu einer maximal bildseitigen Axialposition die Scharfstellungsentfernung von ihrem maximalen zu ihrem minimalen Wert variierbar ist,

### Stand der Technik

Derartige Weitwinkelobjektive sind bekannt aus der JP 2008 170 720 A.

Ein aus der US 6,545,824 B2 bekanntes Objektiv weist eine in herkömmlicher Weise als Retrofokusgruppe aufgebaute Frontgruppe mit zwei negativen Meniskuslinsen und einer positiven Plankonvexlinse auf. In bekannter Weise dient die Retrofokusgruppe im Wesentlichen dazu, die Brennebene des Objektivs nach hinten, d.h. nach bildseitig zu versetzen, um die hintere Schnittweite des Objektivs größer zu gestalten als seine Brennweite. Dies ist insbesondere bei Ultraweitwinkelobjektiven erforderlich, um den notwendigen Raum für standardisierte Anschlüsse des Objektivs an eine Kamera zu ermöglichen. Bildseitig einer Aperturblende ist eine rückwärtige Gruppe angeordnet, die bei dem bekannten Objektiv aus einem Kittglied aus Bikonvex- und Plankonkavlinse sowie aus einer nicht verkitteten Kombination einer Bikonvex- und einer Plankonkavlinse besteht. Zur Fokussierung, d.h. zur Einstellung der Scharfstellungsentfernung des Objektivs, d.h. zur Einstellung derjenigen Entfernung, in der sich ein Objekt befinden muss, um von dem Objektiv scharf in die Detektorebene einer angeschlossenen Kamera abgebildet zu werden, ist ein optisches Einzelelement vorgesehen, welches zwischen der Frontgruppe und der Aperturblende angeordnet und axial verschieblich ist. Bei dem bekannten Objektiv ist dieses hier als Fokussiergruppe bezeichnete optische Einzelelement als Kittglied aus einer Bikonvexlinse und einer Meniskuslinse ausgebildet. Bekanntermaßen ist es der Vorteil einer Innenfokussierung, dass zum einen statt der Gesamtheit sämtlicher Gruppen nur die Fokussiergruppe mit deutlich geringem Gewicht und entsprechend geringen Anforderungen an einen motorischen Antrieb bewegt wird und sich zum anderen bei der Fokussierung die hintere Schnittweite nicht ändert und entsprechend keine oder nur geringe Änderungen des Abbildungsmaßstabes auftreten. Problematisch bei solchen Innenfokussierungssystemen ist jedoch die Korrektion von Abbildungsfehlern, da sich bei der Fokussierung die für die Korrektion wesentlichen Relativabstände des zentralen Objektivbereichs zur Frontgruppe einerseits und zur rückwärtigen Gruppe andererseits verändern. Die resultierenden optischen Leistungen sind daher häufig beschränkt. Bei dem bekannten Objektiv werden bei einem Bildfeldwinkel von unter 90 Grad lediglich eine Brennweite von 35 Millimeter bei einer Blendenzahl (Verhältnis von Brennweite zum Durchmesser der wirksamen Eintrittspupille) von 3,6 erreicht. Als Bildfehler werden für das bekannte Objektiv eine sphärische Aberration von bis zu 0,2 Prozent ein Astigmatismus von bis zu 0,3 Prozent und eine Verzeichnung von bis zu 3 Prozent angegeben.

Aus der US 2010/0265596 A1 ist ein weiteres Objektiv bekannt. Dieses weist eine objektseitige, erste Linsengruppe mit einer negativen Meniskuslinse und einer negativen Plankonkavlinse auf. Bildseitig der ersten Linsengruppe ist eine aus einer dritten, vierten, fünften, sechsten, siebten, achten und neunten Linse bestehende zweite Linsengruppe angeordnet. Die dritte, fünfte, siebte und neunte Linse sind als Bikonvexlinsen, die vierte und achte Linse als negative Meniskuslinsen ausgebildet. Die fünfte und sechste, sowie die achte und neunte Linse sind jeweils zu einem Kittglied verbunden. Als sechste Linse wurde eine Bikonkavlinse verwendet. Das bekannte Objektiv verfügt nicht über die Möglichkeit der Innenfokussierung.

Das aus der oben genannten, gattungsbildenden Druckschrift bekannte Objektiv weist sowohl eine komplexe, vierlinsige Frontgruppe als auch eine komplexe, mehrlinsige Fokussiergruppe auf. Dies ist im Hinblick auf die beim Fokussiervorgang zu bewegenden Massen ebenso ungünstig wie im Hinblick auf die durch die aufwändige Frontgruppe entstehenden Kosten- und das Gewichtsnachteile.

### Aufgabenstellung

Es ist die Aufgabe der vorliegenden Erfindung, ein gattungsgemäßes Objektiv derart weiterzubilden, dass bei geringer Brennweite eine hohe optische Leistung bei geringen Kosten und geringem Gewicht erzielt wird.

### Darlegung der Erfindung

Diese Aufgabe wird in Verbindung mit den Merkmalen des Oberbegriffs von Anspruch 1 dadurch gelöst, dass die Fokussiergruppe aus einem optischen Einzelelement besteht, wenigstens eine asphärische Fläche aufweist und
dass die Meniskuslinsen der Frontgruppe aus derselben Glassorte gefertigt sind und die Frontgruppe zudem bildseitig dieser drei Meniskuslinsen eine Plankonvexlinse mit objektseitig ausgerichteter Konvexfläche aufweist.

Die Bezeichnung "Meniskuslinse" bezieht hier sich auf die über den Durchmesser gekrümmte Grundform der fraglichen Linse und nicht zwingend auf die bei sphärischen Meniskuslinsen stets vorliegende Vorzeichengleichheit der Krümmungsradien von Vorderund Rückfläche. Aufgrund der erfindungsgemäßen Asphärizität können die beiden Flächen lokal, d.h. über ein beschränktes Radialintervall, auch z.B. bikonvex geformt sein. Letzteres kann insbesondere für den Zentralbereich der Abschlusslinse, der sich über bis zu zwei Drittel des Gesamtdurchmessers erstrecken kann, vorgesehen sein.

Bevorzugte Ausführungsformen sind Gegenstand der abhängigen Ansprüche.

Durch die asphärische Gestaltung der Fokussiergruppe kann auf im Hinblick auf das Gewicht der zu bewegenden Gruppe oder auf konstruktive Komplexität nachteilige Maßnahmen, wie beispielsweise die Verwendung eines Kittgliedes, verzichtet werden. Statt dessen kann, wie bei einer bevorzugten Ausführungsform vorgesehen, eine Einzellinse, insbesondere eine bikonvexe Einzellinse als Fokussiergruppe verwendet werden. Durch die Asphärisierung wenigstens einer der Flächen der Fokussiergruppe kann speziell den durch das Innenfokussierungsprinzip entstehenden Aberrationen entgegengetreten werden. Allerdings wird hierdurch eine kompensierende, ebenfalls asphärische Gestaltung eines Elementes im rückwärtigen Objektivbereich erforderlich. Hierzu haben die Erfinder die Abschlusslinse der rückwärtigen Gruppe, d.h. das Abschlusselement des gesamten Objektivs gewählt. Speziell ist als Abschlusslinse eine positive asphärische Meniskuslinse vorgesehen. Diese spezielle Position ist für die asphärische Kompensation besonders geeignet. Zum einen ist der Abstand zwischen dieser Korrekturlinse und der Detektorebene einer angeschlossenen Kamera, d.h. die hintere Schnittweite, aufgrund der Innenfokussierung konstant. Zum anderen haben sich bis zur Axialposition der Abschlusslinse sämtliche durch die objektseitigeren Elemente eingebrachten Aberrationen aufsummiert und können unmittelbar vor der Abbildung in der Bildebene ohne weitere Berücksichtigung nachfolgender optischer Elemente korrigiert werden. Wie weiter unten anhand spezieller Ausführungsformen der Erfindung gezeigt, lassen sich auf diese Weise bei deutlich reduzierter Brennweite des Objektivs wesentlich verbesserte optische Leistungen im Hinblick auf Lichtstärke und Fehlerkorrektion erzielen. Dabei bleibt jedoch der besondere Vorteil des Innenfokussierungsprinzips erhalten. Insbesondere befindet sich die Fokussiergruppe in Nachbarschaft zu der Aperturblende, d.h. zu derjenigen Axialposition des Objektivs, wo das Lichtbündel den kleinsten Durchmesser hat. Folglich kann auch die Fokussiergruppe mit entsprechend kleinem Durchmesser gestaltet werden. Dies hat zum einen Vorteile im Hinblick auf die bei der Fokussierung zu bewegende Masse; zum anderen erleichtert es den Einbau eines motorischen Antriebs, da durch den geringen Durchmesser der Fokussiergruppe ein entsprechender Elektromotor radial außerhalb der Fokussiergruppe und noch innerhalb des üblicherweise zylindrischen Objektivgehäuses hinreichend Bauraum findet.

Erfindungsgemäß ist vorgesehen, dass die Frontgruppe drei einander unmittelbar benachbarte, negative Meniskuslinsen mit objektseitig ausgerichteten Konvexflächen und eine bildseitig davon angeordnete Plankonvexlinse mit objektseitig ausgerichteter Konvexflächeaufweist. Hierdurch lässt sich eine hochwertige Retrofokusgruppe realisieren, die, wie bei einer bevorzugten Ausführungsform vorgesehen, zudem den konstruktiven Vorteil hat, das alle drei Meniskuslinsen aus derselben Glassorte gefertigt sein können.

Günstigerweise ist die Fokussiergruppe der Aperturblende unmittelbar benachbart angeordnet. Wie zuvor bereits erwähnt, liegt der Vorteil dieser Maßnahme in der unmittelbaren Nachbarschaft der Fokussiergruppe zum Bereich des kleinsten Lichtbündeldurchmessers im Objektiv. Entsprechend ergibt sich hieraus ein sehr kleiner Mindestdurchmesser der Fokussiergruppe und als Konsequenz hieraus ein besonders großer radialer Bauraum für einen motorischen Antrieb der Fokussiergruppe.

Alternativ hierzu kann jedoch bei einer anderen Ausführungsform der Erfindung auch vorgesehen sein, dass zwischen der Fokussiergruppe und der Aperturblende ein weiteres Linsenelement angeordnet ist. Dieses ist bevorzugt als eine Linse negativer Brechkraft, insbesondere eine Bikonkavlinse ausgebildet. Diese Ausgestaltung reduziert den zuvor erläuterten Vorteil im Hinblick auf den radialen Bauraum nur geringfügig, erlaubt jedoch die Schaffung eines etwas vergrößerten axialen Bauraums für den Antrieb der Fokussiergruppe und/oder für der Blendenmechanik der Aperturblende.

Bevorzugt ist die rückwärtige Gruppe als ein abbildungsfähiges Grundobjektiv ausgebildet. Dieses ist allerdings normalerweise nicht in sich korrigiert. Grundsätzlich erfolgt die Abbildung im Wesentlichen mittels dieses Grundobjektivs. Die axial vorangehenden Linsen dienen weniger der Abbildung an sich als vielmehr speziellen Modifikationen der Abbildung, nämlich der Rückversetzung des Brennpunktes durch die Frontgruppe (Retrofokus) und der Scharfstellungsentfernungs-Einstellung durch die Fokussiergruppe. Die Korrektion von Abbildungsfehlern erfolgt selbstverständlich im Hinblick auf die durch sämtliche der vorgenannten Elemente eingetragenen Abbildungsfehler, sodass das Grundobjektiv in der Regel nicht in sich korrigiert ist.

Die rückwärtige Gruppe, d.h. das Grundobjektiv, weist bevorzugt in einer Anordnung von ihrem objektseitigen zu ihrem bildseitigen Ende eine Linse positiver Brechkraft, ein Kittglied aus einer Bikonkavlinse und einer Bikonvexlinse und die oben bereits erwähnte, erfindungsgemäß ausgestaltete Abschlusslinse auf.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung einer ersten Ausführungsform eines erfindungsgemäßen Objektivs,
- Figur 2:: asphärische Aberration (a), Astigmatismus (b) und Verzeichnung (c) eines Objektivs gemäß Figur 1, fokussiert auf unendlich,
- Figur 3:: asphärische Aberration (a), Astigmatismus (b) und Verzeichnung (c) eines Objektivs gemäß Figur 1, fokussiert auf geringste Arbeitsweite,
- Figur 4:: eine schematische Darstellung einer zweiten Ausführungsform eines nicht erfindungsgemäßen Objektivs,
- Figur 5:: asphärische Aberration (a), Astigmatismus (b) und Verzeichnung (c) eines Objektivs gemäß Figur 4, fokussiert auf unendlich,
- Figur 6:: asphärische Aberration (a), Astigmatismus (b) und Verzeichnung (c) eines Objektivs gemäß Figur 4, fokussiert auf geringste Arbeitsweite,
- Figur 7:: eine schematische Darstellung einer dritten Ausführungsform eines erfindungsgemäßen Objektivs,
- Figur 8:: asphärische Aberration (a), Astigmatismus (b) und Verzeichnung (c) eines Objektivs gemäß Figur 7, fokussiert auf unendlich,
- Figur 9:: asphärische Aberration (a), Astigmatismus (b) und Verzeichnung (c) eines Objektivs gemäß Figur 7, fokussiert auf geringste Arbeitsweite.

### Ausführliche Beschreibung bevorzugter Ausführungsformen

Gleiche Bezugszeichen in den Figuren deuten auf gleiche oder analoge Elemente hin.

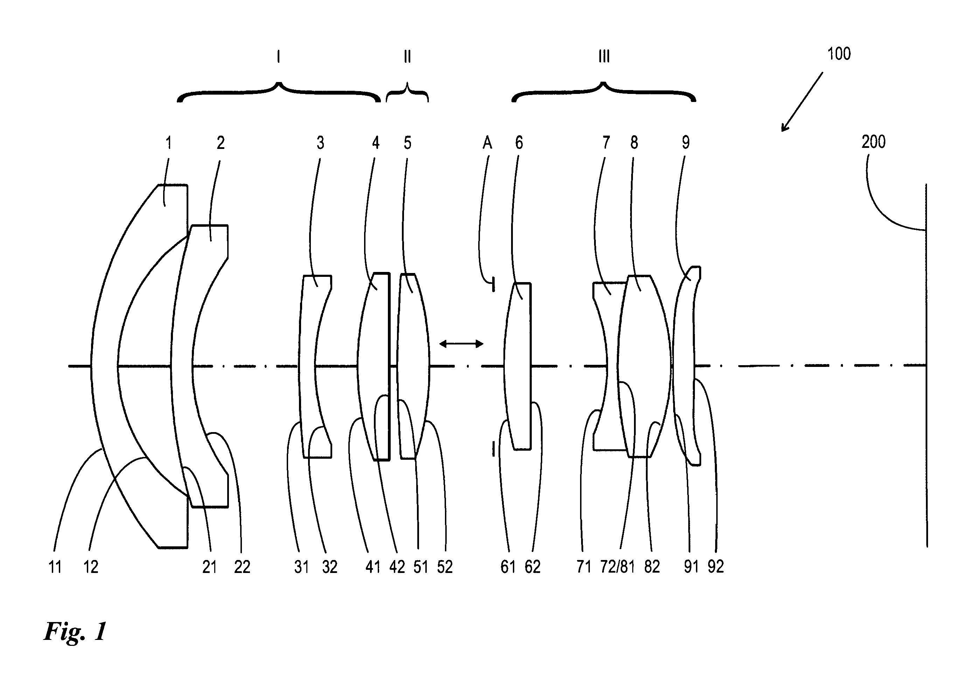

Figur 1 zeigt eine erste Ausführungsform eines erfindungsgemäßen Weitwinkelobjektivs 100. Das Objektiv 100 dient der Abbildung eines nicht dargestellten Objektes auf eine Bildebene 200. Das Objektiv 100 umfasst eine objektseitig angeordnete Frontgruppe I, eine bildseitig angeordnete rückwärtige Gruppe III, eine objektseitig der rückwärtigen Gruppe III angeordnete Aperturblende A und eine zwischen der Frontgruppe I und der Aperturblende A angeordnete Fokussiergruppe II. Die Frontgruppe I umfasst eine erste Linse 1 mit einer objektseitigen Fläche 11 und einer bildseitigen Fläche 12, eine zweite Linse 2 mit einer objektseitigen Fläche 21 und einer bildseitigen Fläche 22, eine dritte Linse 3 mit einer objektseitigen Fläche 31 und einer bildseitigen Fläche 32 sowie eine vierte Linse 4 mit einer objektseitigen Fläche 41 und einer bildseitigen Fläche 42. Die Linsen 1, 2, 3, 4, der Frontgruppe I sind starr zueinander angeordnet. Die erste Linse 1 ist als negative Meniskuslinse ausgebildet, wobei ihre objektseitige Fläche 11 einen größeren Krümmungsradius aufweist als ihre bildseitige Fläche 12. Die zweite Linse 2 ist ebenfalls als negative Meniskuslinse ausgebildet, deren objektseitige Fläche 21 einen größeren Krümmungsradius aufweist als ihre bildseitige Fläche 22. Die dritte Linse 3 ist ebenfalls als negative Meniskuslinse ausgebildet, deren objektseitige Fläche 31 einen größeren Krümmungsradius aufweist als ihre bildseitige Fläche. Die vierte Linse 4 schließlich ist als Plankonvexlinse ausgebildet, wobei ihre objektseitige Fläche 41 gekrümmt ist.

Die Fokussiergruppe II besteht bei der gezeigten Ausführungsform aus einer einzelnen, hier als fünfte Linse 5 bezeichneten Linse mit einer objektseitigen Fläche 51 und einer bildseitigen Oberfläche 52. Die fünfte Linse 5 ist als Bikonvexlinse ausgebildet, wobei ihre objektseitige Fläche 51 einen größeren Krümmungsradius aufweist als ihre bildseitige Fläche. Die fünfte Linse 5 ist axial verschieblich angeordnet und vorzugsweise motorisch angetrieben. Sie ist in unmittelbarer Nachbarschaft zu der Aperturblende A angeordnet. Die fünfte Linse 5 ist asphärisch ausgebildet, wobei bevorzugt beide Flächen 51, 52 asphärisch sind.

Die rückwärtige Gruppe III weist eine sechste Linse 6 mit einer objektseitigen Fläche 61 und einer bildseitigen Fläche 62, eine siebte Linse 7 mit einer objektseitigen Fläche 71 und einer bildseitigen Fläche 72, eine achte Linse 8 mit einer objektseitigen Fläche 81 und einer bildseitigen Fläche 82 sowie eine neunte Linse 9 mit einer objektseitigen Fläche 91 und einer bildseitigen Fläche 92 auf. Die Linsen 6, 7, 8, 9 der rückwärtigen Gruppe III sind starr zueinander sowie starr zu der Frontgruppe I und zur Aperturblende A angeordnet. Die sechste Linse 6 ist als Plankonvexlinse ausgebildet, deren objektseitige Fläche 61 gekrümmt gestaltet ist. Die siebte Linse 7 und die achte Linse 8 sind gemeinsam als ein Kittglied ausgebildet, wobei die siebte Linse 7 als Bikonkavlinse und die achte Linse 8 als Bikonvexlinse ausgebildet ist. Der Krümmungsradius der objektseitigen Fläche 71 der siebten Linse 7 ist kleiner als der Krümmungsradius ihrer bildseitigen Fläche 72. Der an den Krümmungsradius der bildseitigen Fläche 72 der siebten Linse 7 angepasste Krümmungsradius der objektseitigen Fläche 81 der achten Linse 8 ist größer als der Krümmungsradius deren bildseitiger Fläche 82. Die neunte Linse 9 ist als Abschlusslinse des Objektivs 100 als positive Meniskuslinse ausgebildet, deren objektseitige Fläche 91 konvex ausgestaltet ist. Die neunte Linse 9 ist asphärisch ausgebildet, wobei bevorzugt beide Flächen 91, 92 asphärisch sind. Über ihren gesamten Durchmesser gesehen ist die bildseitige Fläche 92 der neunten Linse 9 konkav gestaltet; in ihrem Zentralbereich jedoch lokal konvex.

Aufgrund des realisierten Innenfokussierungs-Prinzips ist Abstand der Frontgruppe I und der rückwärtigen Gruppe III zueinander und zur Bildebene 200 konstant, wohingegen der Abstand der fünften Linse 5 der Fokussiergruppe II zur Bildebene 200 variabel ist. Insbesondere führt eine Verschiebung der fünften Linse 5 in Richtung der Frontgruppe I zu einer Scharfstellung von weiter entfernten Objekten auf die Bildebene 200 und eine Verschiebung der fünften Linse 5 in Richtung der Aperturblende A zu einer Scharfstellung von näher gelegenen Objekten auf die Bildebene 200.

Eine bevorzugte konkrete Ausgestaltung eines Objektivs 100 gemäß Figur 1 ist in Tabelle 1 wiedergegeben. Alle hier und im Folgenden angegebenen Zahlenwerte sind als auf die letzte angegebene Nachkommastelle gerundet zu verstehen. Sie beziehen sich im Fall des Krümmungsradius auf die jeweils in der ersten Spalte angegebene Fläche und im Fall des Abstandes, des Brechungsindexes und der Abbe-Zahl auf den Bereich zwischen der jeweils in der ersten Spalte angegebenen und der bildseitig nächstgelegenen Fläche. Das Vorzeichen des Krümmungsradius ist jeweils positiv für objektseitig konvexe und negativ für bildseitig konvexe Krümmungen gewählt.

**Tabelle 1**

| **Fläche** | **Krümmungsradius [mm]** | **Abstand [mm]** | **Brechungsindex** | **Abbe-Zahl** |
|---|---|---|---|---|
| 11 | 24,575 | 2,5 | 1,607 | 56,65 |
| 12 | 13,841 | 4,975 | | |
| 21 | 42,010 | 2,0 | 1,607 | 56,65 |
| 22 | 16,091 | 10,0 | | |
| 31 | 76,225 | 1,5 | 1,607 | 56,65 |
| 32 | 17,133 | 4,0 | | |
| 41 | 24,111 | 3,0 | 1,607 | 56,65 |
| 42 | ∞ | 0,75-3,5 | | |
| 51 (asp) | 85,543 | 3,0 | 1,515 | 63,90 |
| 52 (asp) | -28,983 | 5,0 - 2,25 | | |
| A | ∞ | 1,0 | | |
| 61 | 31,599 | 2,5 | 1,786 | 44,2 |
| 62 | ∞ | 7,201 | | |
| 71 | -15,823 | 1,0 | 1,846 | 23,82 |
| 72/81 | 38,909 | 5,0 | 1,788 | 47,47 |
| 82 | -18,028 | 0,2 | | |
| 91 (asp) | 66,260 | 2,0 | 1,739 | 49,01 |
| 92 (asp) | -122,66 | 20,458 | | |
| 200 | ∞ | | | |

In der obigen Tabelle 1 sind die asphärisch ausgestalteten Flächen mit "asp" gekennzeichnet. Es handelt sich dabei um die beiden Flächen 51, 52, der fünften Linse 5 der Fokussiergruppe II sowie um die beiden Flächen 91, 92 der Abschlusslinse, d.h. der neunten Linse 9. Hier bezieht sich der angegebene, negative Krümmungsradius der bildseitigen Fläche 92 auf deren Zentralbereich. Die Asphärenkoeffizienten sind bevorzugt wie folgt ausgestaltet.
51: A=-0,763039E-05, B=-0,376225E-06, C=0,366786E-08
52: A=-0,180289E-04, B=-0,306385E-06, C=0,330624E-08
91: A=0,877599E-04, B=0,135798E-05, C=0,149129E-08
92: A=0,141240E-03, B=0,109228E-05, C=0,103390E-07

Aufgrund der axialen Verschiebbarkeit der fünften Linse 5 ändern sich die Abstände ihrer Flächen 51, 52 relativ zu den nächstbenachbarten Flächen mit der Fokussiereinstellung. Insbesondere variiert der Abstand zwischen der vierten Linse 4 und der fünften Linse 5 zwischen 0,75 Millimeter für Einstellung "∞" und 3,5 Millimeter für die Einstellung auf den geringsten Arbeitsabstand, nämlich insbesondere 225 Millimeter. Der Abstand zwischen der fünften Linse 5 und der Aperturblende A variiert entsprechend zwischen 5,0 Millimeter für die Einstellung "∞" und 2,25 Millimeter für die Einstellung auf den geringsten Arbeitsabstand.

Ein derartiges Objektiv weist eine Brennweite zwischen 14,45 Millimeter (Einstellung "∞") und 13,4 Millimeter (Einstellung "geringster Arbeitsabstand"), eine Blendenzahl zwischen 2,11 ("∞") und 2,07 ("geringsterArbeitsabstand") und einen Bildwinkel zwischen 89,6 Grad ("∞") und 93 Grad ("geringster Arbeitsabstand") auf.

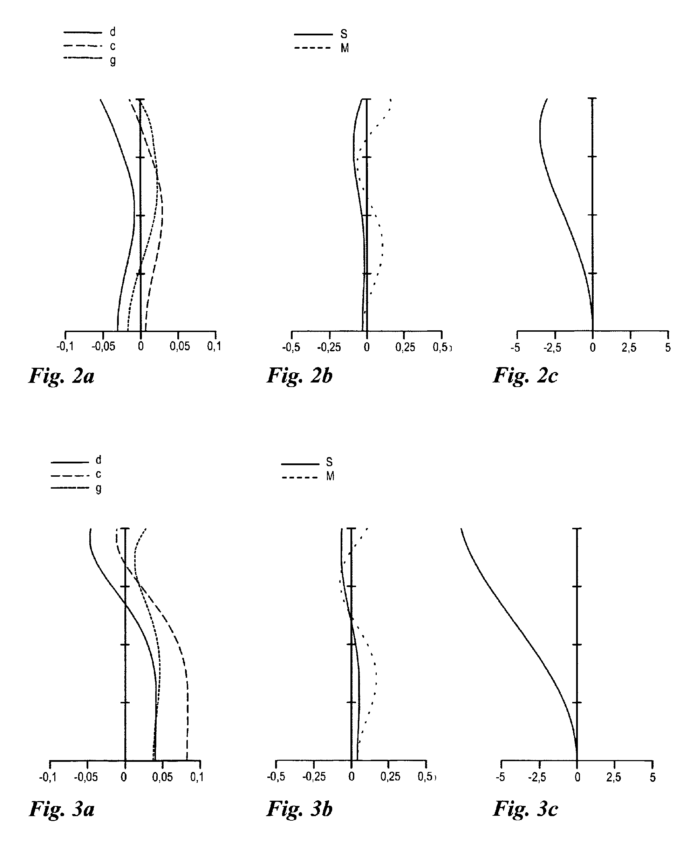

Die Figuren 2 und 3 zeigen die entsprechenden Abbildungsfehler, nämlich Figur 2 für die Fokussiereinstellung "∞" und Figur 3 für die Fokussiereinstellung "nächster Arbeitsabstand". Die Teilfiguren a zeigen dabei jeweils die sphärische Aberration in Prozent für die Fraunhofer-Linien d, c und g, die Teilfiguren b zeigen jeweils den Astigmatismus in der Sagittalebene (S) und der Meridionalebene (M) und die Teilfiguren c jeweils die Verzeichnung. Die Zahlenangaben auf der x-Achse sind Prozentangaben. Die y-Achse repräsentiert den halben Bildwinkel ausgehend von der optischen Achse. Man erkennt die extrem geringen Abbildungsfehler, die das erfindungsgemäße Objektiv bekannten Objektiven überlegen macht.

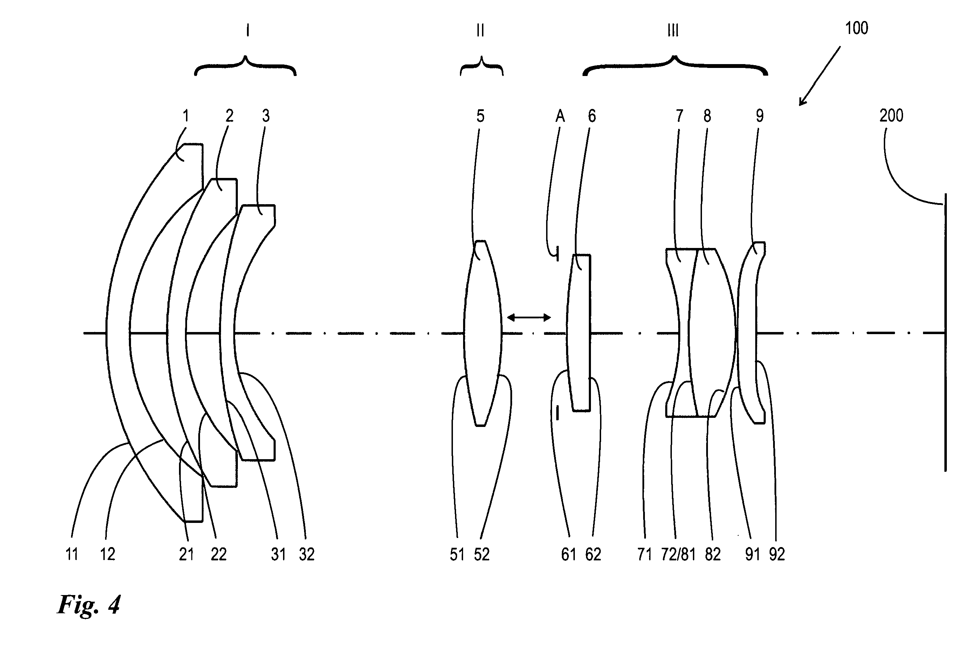

Figur 4 zeigt eine Ausführungsform eines nicht erfindungsgemäßen Objektivs 100'. Der grundlegende Aufbau ist der gleiche wie bei der Ausführungsform von Figur 1, daher soll bei der Beschreibung von Figur 4 lediglich auf die wesentlichen Unterschiede zu Figur 1 eingegangen werden. Im Übrigen wird auf das oben Gesagte verwiesen. Dies gilt insbesondere auch für die im Zusammenhang mit Figur 1 eingeführten und auch in Figur 4 verwendeten Bezugszeichen.

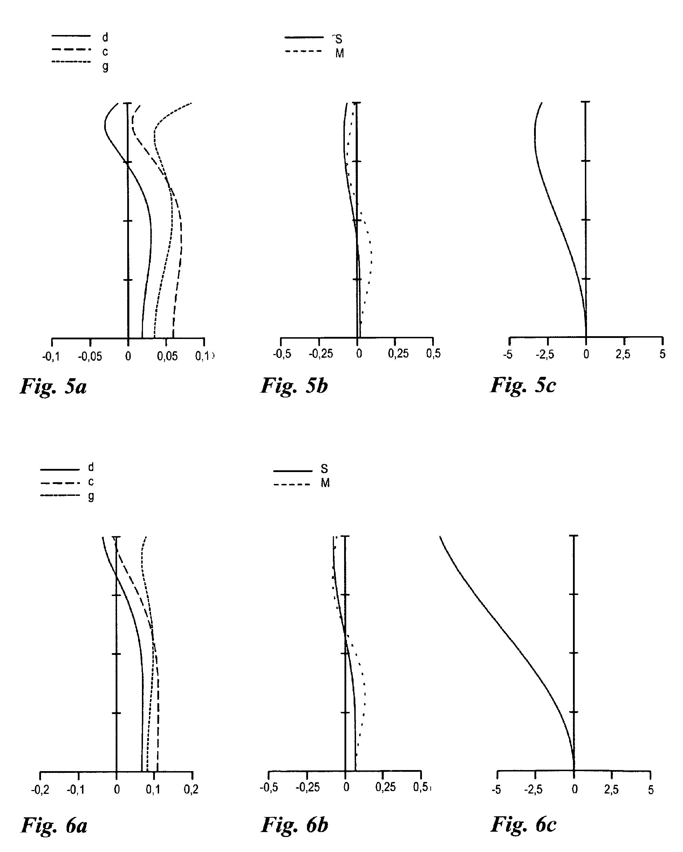

Der grundlegende Aufbau des Objektivs von Figur 4 zeichnet sich gegenüber dem grundlegenden Aufbau der Ausführungsform von Figur 1 in erster Linie dadurch aus, dass die Frontgruppe I aus lediglich drei negativen Meniskuslinsen 1, 2, 3 besteht. Eine vierte Linse der Frontgruppe I ist bei der Ausführungsform von Figur 4 nicht vorgesehen. Das Fehlen der vierte Linse wird, wie die nachstehende Tabelle 2 zeigt, kompensiert durch die Einführung einer weiteren asphärischen Fläche, nämlich der objektseitigen Fläche 61 der sechsten Linse 6. Vollständig lässt sich das Fehlen der vierten Linse jedoch nicht kompensieren, wie die Figuren 5 und 6 zeigen, die in analoger Weise zu den Figuren 2 und 3 die Abbildungsfehler des Objektivs gemäß Figur 4, realisiert mit den Werten der nachfolgenden Tabelle 2 darstellen. Insbesondere der Vergleich der Figuren 5a und 6a mit den Figuren 2a und 3a zeigt, dass die sphärische Aberration bei der Ausführungsform gemäß Figur 4 geringfügig größer ist als bei der Ausführungsform gemäß Figur 1, gleichwohl noch deutlich geringer als aus dem Stand der Technik bekannt.

Bevorzugte Werte für die konkrete Gestaltung eines Objektivs der Ausführungsform gem. Figur 4 lauten wie folgt:

**Tabelle 2**

| **Fläche** | **Krümmungsradius [mm]** | **Abstand [mm]** | **Brechungsindex** | **Abbe-Zahl** |
|---|---|---|---|---|
| 11 | 27,089 | 2,5 | 1,607 | 56,65 |
| 12 | 18,129 | 3,995 | | |
| 21 | 29,126 | 2,0 | 1,607 | 56,65 |
| 22 | 16,436 | 3,670 | | |
| 31 | 37,889 | 1,5 | 1,607 | 56,65 |
| 32 | 16,416 | 24,666 - 28,936 | | |
| 51 (asp) | 34,404 | 4,0 | 1,517 | 64,14 |
| 52 (asp) | -26,530 | 5,0 - 2,25 | | |
| A | ∞ | 1,0 | | |
| 61 (asp) | 40,924 | 2,5 | 1,517 | 64,14 |
| 62/13 | ∞ | 9,602 | | |
| 71 | -19,886 | 1,0 | 1,846 | 23,82 |
| 72/81 | 39,179 | 5,0 | 1,788 | 47,47 |
| 82 | -18,542 | 0,2 | | |
| 91 (asp) | 315,2 | 2,0 | 1,739 | 49,01 |
| 92 (asp) | -111,77 | 20,237 | | |
| 200 | ∞ | | | |

In der obigen Tabelle 2 sind die asphärisch ausgestalteten Flächen mit "asp" gekennzeichnet. Es handelt sich dabei um die beiden Flächen 51, 52, der fünften Linse 5 der Fokussiergruppe II, die objektseitige Fläche 61 der sechsten Linse 6 sowie um die beiden Flächen 91, 92 der Abschlusslinse, d.h. der neunten Linse 9. Hier bezieht sich der angegebene, negative Krümmungsradius der bildseitigen Fläche 92 auf deren Zentralbereich. Die Asphärenkoeffizienten sind bevorzugt wie folgt ausgestaltet.
51: A=-1,63452E-05, B=-0,659234E-07, C=-0,108755E-09
52: A=0,494587E-05, B=-0,748355E-07, C=0,118988E-09
61: A=-0,179157E-04, B=-0,887314E-07, C=0,252232E-09
91: A=0,139413E-03, B=0,103833E-05, C=0,118247E-08
92: A=0,176934E-03, B=0,102411E-05; C=0,486927E-08

Aufgrund der axialen Verschiebbarkeit der fünften Linse 5 ändern sich die Abstände ihrer Flächen 51, 52 relativ zu den nächstbenachbarten Flächen mit der Fokussiereinstellung. Insbesondere variiert der Abstand zwischen der dritten Linse 3 und der fünften Linse 5 zwischen 24,7 Millimeter für Einstellung "∞" und 27,45 Millimeter für die Einstellung auf den geringsten Arbeitsabstand, nämlich insbesondere 225 Millimeter. Der Abstand zwischen der fünften Linse 5 und der Aperturblende A variiert entsprechend zwischen 5,0 Millimeter für die Einstellung "∞" und 2,25 Millimeter für die Einstellung auf den geringsten Arbeitsabstand.

Ein derartiges Objektiv 100' weist eine Brennweite zwischen 14,46 Millimeter ("∞") und 13,06 Millimeter ("geringster Arbeitsabstand"), eine Blendenzahl zwischen 2,11 ("∞") und 2,08 ("geringster Arbeitsabstand") und einen Bildwinkel zwischen 89,6 Grad ("∞") und 94,6 Grad ("geringster Arbeitsabstand").

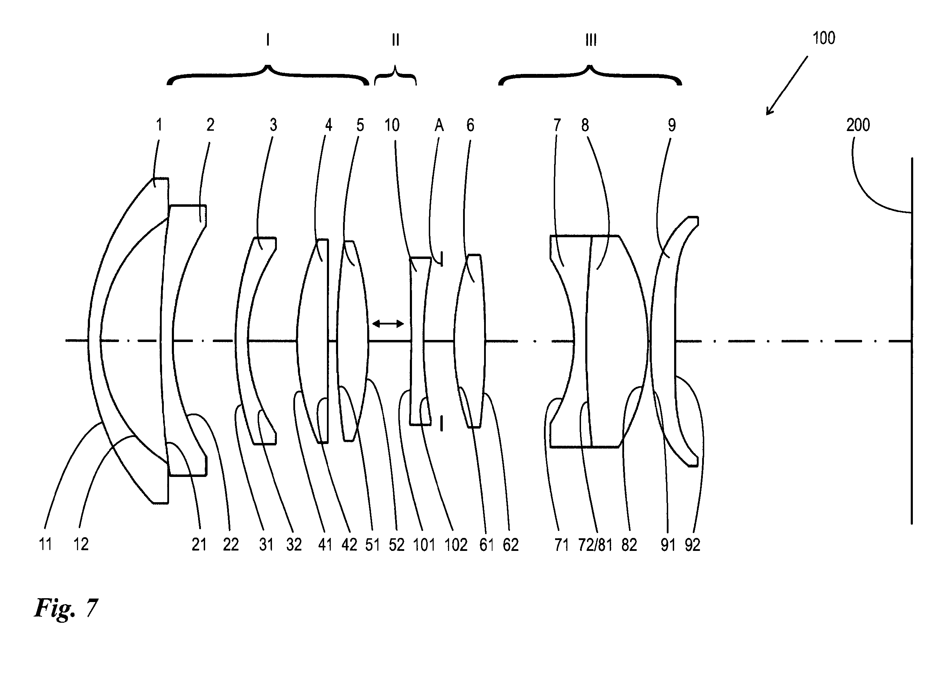

Figur 7 zeigt eine dritte Ausführungsform eines erfindungsgemäßen Objektivs 100", die ebenfalls im Wesentlichen Grundaufbau aufweist wie die Ausführungsform von Figur 1, weshalb auch hier im Wesentlichen nur auf die Unterschiede zu der Ausführungsform von Figur 1 eingegangen werden soll. Im Übrigen kann auf das oben Gesagte verwiesen werden. Insbesondere werden dieselben, im Zusammenhang mit Figur 1 bereits eingeführten Bezugszeichen verwendet.

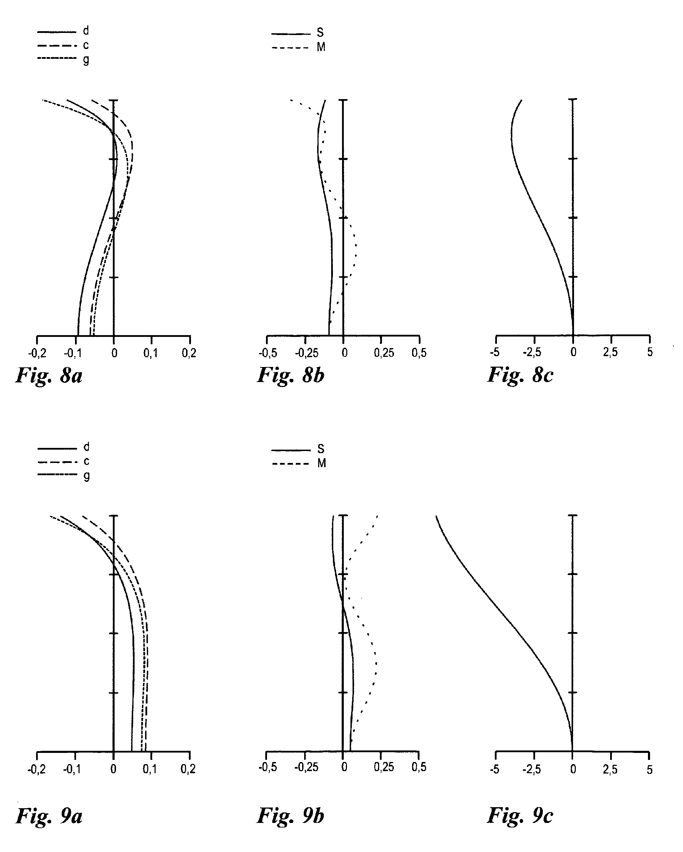

Der Grundaufbau des Objektivs 100" gem. Figur 7 unterscheidet sich von demjenigen des Objektivs 100 von Figur 1 in erster Linie durch eine zusätzliche zehnte Linse 10, die als negative Linse, insbesondere als Bikonkavlinse, insbesondere als Bikonkavlinse deren objektseitige Fläche 101 einen größeren Krümmungsradius aufweist als ihre bildseitige Fläche 102. Diese zusätzliche zehnte Linse 10 erlaubt eine Reduktion der Anzahl asphärischer Flächen um eine. Bevorzugt wird die bildseitige Fläche 52 der Fokussierlinse, d.h. der fünften Linse 5 sphärisch gestaltet, sodass die Fokussiergruppe II nur eine asphärische Fläche aufweist, nämlich die bildseitige Fläche 51 der fünften Linse 5. Weiter ergibt sich eine Änderung der sechsten Linse 6, deren bildseitige Fläche 62 nicht plan sondern gekrümmt gestaltet ist. Wie die Figuren 8 und 9 zeigen, die in analoger Weise zu den Figuren 2 und 3 bzw. 5 und 6 die Abbildungsfehler des Objektivs 100" gemäß Figur 7, realisiert mit den Werten der nachfolgenden Tabelle 3 darstellen, ist insbesondere die sphärische Aberration bei der Naheinstellung etwas schlechter als bei den anderen Ausführungsformen. Auch das Gewicht des Objektivs 100" ist aufgrund der zusätzlichen zehnten Linse 10 etwas höher als bei den anderen Ausführungsformen. Allerdings gestaltet sich die Herstellung aufgrund des Wegfalls einer asphärischen Fläche einfacher und damit kostengünstiger.

Bevorzugte Werte für die konkrete Ausgestaltung eines Objektivs gem. Figur 7 sind in der nachfolgenden Tabelle 3 wiedergegeben.

**Tabelle 3**

| **Fläche** | **Krümmungsradius [mm]** | **Abstand [mm]** | **Brechungsindex** | **Abbe-Zahl** |
|---|---|---|---|---|
| 11 | 18,174 | 1,0 | 1,613 | 58,63 |
| 12 | 11,224 | 4,844 | | |
| 21 | 71,694 | 1,0 | 1,613 | 58,63 |
| 22 | 16,591 | 5,077 | | |
| 31 | 22,719 | 1,0 | 1,613 | 58,63 |
| 32 | 12,566 | 4,0 | | |
| 41 | 19,542 | 2,5 | 1,522 | 59,48 |
| 42 | ∞ | 0,75-3,5 | | |
| 51 | 53,089 | 2,5 | 1,465 | 65,77 |
| 52 (asp) | -28,766 | 3,5 - 0,75 | | |
| 101 | -244,48 | 1,0 | 1,517 | 64,17 |
| 102 | 33,109 | 1,5 | | |
| A | ∞ | 1,0 | | |
| 61 | 20,536 | 2,5 | 1,713 | 53,83 |
| 62 | -57,38 | 7,222 | | |
| 71 | -11,979 | 1,0 | 1,846 | 23,82 |
| 72/81 | 75,278 | 5,0 | 1,788 | 47,47 |
| 82 | -15,623 | 0,2 | | |
| 91 (asp) | 34,235 | 2,0 | 1,743 | 49,31 |
| 92 (asp) | 929,51 ("plan") | 19,089 | | |
| 200 | ∞ | | | |

In der obigen Tabelle 3 sind die asphärisch ausgestalteten Flächen mit "asp" gekennzeichnet. Es handelt sich dabei um die bildseitige Fläche 52 der fünften Linse 5 der Fokussiergruppe II sowie um die beiden Flächen 91, 92 der Abschlusslinse, d.h. der neunten Linse 9. Hier bezieht sich der angegebene, "plane" Krümmungsradius der bildseitigen Fläche 92 auf deren Zentralbereich. Die Asphärenkoeffizienten sind bevorzugt wie folgt ausgestaltet.
52: A=-0,282076E-04, B=-0,348231E-07, C=-0,128230E-09
91: A=0,697625E-04, B=0,719545E-06, C=0,484016E-08
92: A=0,137339E-03, B=0,469719E-06, C=0,115923E-07

Aufgrund der axialen Verschiebbarkeit der fünften Linse 5 ändern sich die Abstände ihrer Flächen 51, 52 relativ zu den nächstbenachbarten Flächen mit der Fokussiereinstellung. Insbesondere variiert der Abstand zwischen der vierten Linse 4 und der fünften Linse 5 zwischen 0,75 Millimeter für Einstellung und 3,5 Millimeter für die Einstellung auf den geringsten Arbeitsabstand, nämlich insbesondere 225 Millimeter. Der Abstand zwischen der fünften Linse 5 und der zehnten Linse 10 variiert entsprechend zwischen 3,5 Millimeter für die Einstellung "∞" und 0,75 Millimeter für die Einstellung auf den geringsten Arbeitsabstand.

Ein derartiges Objektiv 100" weist eine Brennweite zwischen 14,45 Millimetern ("∞") und 13,38 Millimetern ("geringster Arbeitsabstand"), eine Blendenzahl zwischen 2,11 ("∞") und 2,08 ("geringster Arbeitsabstand") sowie einen Bildwinkel zwischen 89,6 Grad ("∞")und 93,2 Grad ("geringster Arbeitsabstand").

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

| | | | |
|---|---|---|---|
| Bezugszeichenliste | | 9 | neunte Linse / Abschlusslinse |
| | | 91 | objektseitige Fläche von 9 |
| 100 | Objektiv | 92 | bildseitige Fläche von 9 |
| 100' | Objektiv | 10 | zehnte Linse |
| 100" | Objektiv | 101 | objektseitige Fläche von 10 |
| 200 | Bildebene | 102 | bildseitige Fläche von 10 |
| A | Aperturblende | | |
| I | Frontgruppe | | |
| 1 | erste Linse | | |
| 11 | objektseitige Fläche von 1 | | |
| 12 | bildseitige Fläche von 1 | | |
| 2 | zweite Linse | | |
| 21 | objektseitige Fläche von 2 | | |
| 22 | bildseitige Fläche von 2 | | |
| 3 | dritte Linse | | |
| 31 | objektseitige Fläche von 3 | | |
| 32 | bildseitige Fläche von 3 | | |
| 4 | vierte Linse | | |
| 41 | objektseitige Fläche von 4 | | |
| 42 | bildseitige Fläche von 4 | | |
| II | Fokussiergruppe | | |
| 5 | fünfte Linse | | |
| 51 | objektseitige Fläche von 5 | | |
| 52 | bildseitige Fläche von 5 | | |
| III | rückwärtige Gruppe | | |
| 6 | sechste Linse | | |
| 61 | objektseitige Fläche von 6 | | |
| 62 | bildseitige Fläche von 6 | | |
| 7 | siebte Linse | | |
| 71 | objektseitige Fläche von 7 | | |
| 72 | bildseitige Fläche von 7 | | |
| 8 | achte Linse | | |
| 81 | objektseitige Fläche von 8 | | |
| 82 | bildseitige Fläche von 8 | | |

## Patentansprüche

1. Fotografisches Weitwinkelobjektiv mit Innenfokussierung, umfassend drei Linsengruppen (I, II, III), nämlich
- eine in sich starre, objektseitig fest angeordnete Frontgruppe (I) negativer Brechkraft mit drei einander unmittelbar benachbarten, negativen Meniskuslinsen (1, 2, 3) mit objektseitig ausgerichteten Konvexflächen (11, 21, 31),
- eine in sich starre, rückwärtige Gruppe (III) positiver Brechkraft, die bildseitig einer Aperturblende (A) fest angeordnet ist und deren bildseitige Abschlusslinse (9) als positive, asphärische Meniskuslinse ausgebildet ist, und
- eine axial bewegbare, zwischen der Frontgruppe (I) und der Aperturblende (A) angeordnete Fokussiergruppe (II) positiver Brechkraft, durch deren Linearverschiebung von einer maximal objektseitigen zu einer maximal bildseitigen Axialposition die Scharfstellungsentfernung von ihrem maximalen zu ihrem minimalen Wert variierbar ist,
**dadurch gekennzeichnet,**
**dass** die Fokussiergruppe aus einem optischen Einzelelement (5) besteht, das wenigstens eine asphärische Fläche (51, 52) aufweist und
**dass** die Meniskuslinsen (1, 2, 3) der Frontgruppe (I) aus derselben Glassorte gefertigt sind und die Frontgruppe (I) zudem bildseitig dieser drei Meniskuslinsen (1, 2, 3) eine Plankonvexlinse (4) mit objektseitig ausgerichteter Konvexfläche (41) aufweist.

2. Weitwinkelobjektiv nach Anspruch 1,
**dadurch gekennzeichnet,**
**dass** das optische Einzelelement der Fokussiergruppe (II) als eine bikonvexe Einzellinse (5) ausgebildet ist.

3. Weitwinkelobjektiv nach einem der vorangehenden Ansprüche,
**dadurch gekennzeichnet,**
**dass** die Fokussiergruppe (II) der Aperturblende (A) unmittelbar benachbart angeordnet ist.

4. Weitwinkelobjektiv nach einem der Ansprüche 1 bis 2,
**dadurch gekennzeichnet,**
**dass** zwischen der Fokussiergruppe (II) und der Aperturblende (A) ein weiteres Linsenelement (10) angeordnet ist.

5. Weitwinkelobjektiv nach Anspruch 4,
**dadurch gekennzeichnet,**
**dass** das weitere Linsenelement (10) als eine Bikonkavlinse ausgebildet ist.

6. Weitwinkelobjektiv nach einem der vorangehenden Ansprüche,
**dadurch gekennzeichnet,**
**dass** die rückwärtige Gruppe (III) als ein abbildungsfähiges Grundobjektiv ausgebildet ist.

7. Weitwinkelobjektiv nach einem Anspruch 6,
**dadurch gekennzeichnet,**
**dass** die rückwärtige Gruppe (III) in einer Anordnung von ihrem objektseitigen zu ihrem bildseitigen Ende eine Linse positiver Brechkraft (6), ein Kittglied aus einer Bikonkavlinse (7) und einer Bikonvexlinse (8) und die Abschlusslinse (9) aufweist.

## Claims

1. A photographic wide-angle lens system with internal focusing, comprising three lens arrays (I, II, III), namely
- a front array (I) of negative refractive power that is rigid within itself and is fixed on the object side, having three immediately adjacent negative meniscus lenses (1, 2, 3) with convex surfaces (11,21, 31) aligned on the object side
- a rear array (III) of positive refractive power that is rigid within itself and is fixed on the image side of an aperture diaphragm (A), the image-side end lens (9) of the rear array (III) being configured as a positive aspheric meniscus lens, and
- a focusing array (II) of positive refractive power that is arranged between the front array (I) and the aperture diaphragm (A) and is axially movable, the linear displacement of which from a maximum axial position on the object side to a maximum axial position on the image side allows the focus distance to be varied from its maximum to its minimum value,
**characterized in that**
the focusing array consists of an optical single element (5) having at least one aspheric surface (51, 52) and
that the meniscus lenses (1, 2, 3) of the front array (I) are made from the same sort of glass, and in addition the front array (I) comprises on the image side of these three meniscus lenses (1, 2, 3) a plano-convex lens (4) with a convex surface (41) aligned on the object side.

2. The wide-angle lens system according to Claim 1,
**characterized in that**
the optical single element of the focusing array (II) is designed as a biconvex single lens (5).

3. The wide-angle lens system according to any of the preceding claims, **characterized in that**
the focusing array (II) is arranged immediately adjacent to the aperture diaphragm (A).

4. The wide-angle lens system according to any of Claims 1 to 2,
**characterized in that**
a further lens element (10) is arranged between the focusing array (II) and the aperture diaphragm (A).

5. The wide-angle lens system according to Claim 4,
**characterized in that**
the further lens element (10) is designed as a biconcave lens.

6. The wide-angle lens system according to any of the preceding claims, **characterized in that**
the rear array (III) is configured as a basic lens system that is capable of imaging.

7. The wide-angle lens system according to Claim 6,
**characterized in that**
the rear array (III), in one configuration, comprises from its object-side through to its image side end, a lens with positive refractive power (6), a cemented component made up of a biconcave lens (7) and a biconvex lens (8), and the end lens (9).

## Revendications

1. Objectif photographique grand angle à mise au point interne, comprenant trois groupes de lentilles (I, II, III), à savoir
- un groupe avant (I) en soi rigide, disposé fixement côté objet, à réfringence négative, avec trois lentilles ménisques (1, 2, 3) directement voisines les unes des autres, ayant des surfaces convexes (11, 21, 31) orientées côté objet,
- un groupe arrière (III) en soi rigide, à réfringence positive, qui est disposé fixement côté image d'un diaphragme (A) et dont la lentille terminale (9) côté image est réalisée sous la forme d'une lentille ménisque asphérique positive ;
- et un groupe (II) de mise au point à réfringence positive, axialement mobile, disposé entre le groupe avant (I) et le diaphragme (A), dont le déplacement linéaire d'une position axiale maximale côté objet à une position axiale maximale côté image permet de faire varier la distance de mise au point de sa valeur maximale à sa valeur minimale,
**caractérisé en ce que** le groupe de mise au point est constitué d'un élément optique monopièce (5) qui présente au moins une surface asphérique (51, 52),
et **en ce que** les lentilles ménisques (1, 2 3) du groupe avant (I) sont fabriquées dans le même type de verre, et le groupe avant (I) présente en outre côté image de ces trois lentilles ménisques (1, 2 3) une lentille plan-convexe (4) ayant une surface convexe (41) orientée côté objet.

2. Objectif grand angle selon la revendication 1,
**caractérisé en ce que** l'élément optique monopièce du groupe de mise au point (II) est réalisé sous la forme d'une lentille monopièce biconvexe (5).

3. Objectif grand angle selon l'une des revendications précédentes,
**caractérisé en ce que** le groupe de mise au point (II) est disposé au voisinage immédiat du diaphragme (A).

4. Objectif grand angle selon l'une des revendications 1 à 2,
**caractérisé en ce qu'**un élément lentille supplémentaire (10) est disposé entre le groupe de mise au point (II) et le diaphragme (A).

5. Objectif grand angle selon la revendication 4,
**caractérisé en ce que** l'élément lentille supplémentaire (10) est réalisé sous la forme d'une lentille biconcave.

6. Objectif grand angle selon l'une des revendications précédentes,
**caractérisé en ce que** le groupe arrière (III) est réalisé sous la forme d'un objectif de base apte à la formation d'image.

7. Objectif grand angle selon la revendication 6,
**caractérisé en ce que** le groupe arrière (III) présente, dans une disposition de son extrémité côté objet à son extrémité côté image, une lentille (6) à réfringence positive, un élément collé constitué d'une lentille biconcave (7) et d'une lentille biconvexe (8), et la lentille terminale (9).
